# EUROPEAN PATENT APPLICATION

(11) **EP 4 428 889 A1**
(43) Date of publication of application: **11.09.2024**
(21) Application number: 22885745.4
(22) Date of filing: 18.10.2022
(51) Int. Cl.: H01H 1/58, H02M 7/00

(54) **INVERTER AND DIRECT-CURRENT SWITCH ASSEMBLY**

(30) Priority: 01.11.2021 CN 202111283934
(71) Applicant: Sungrow Power Supply Co., Ltd., Hefei, Anhui 230088 (CN)
(72) Inventor: YU, Yanfei, Hefei, Anhui 230088 (CN); SHEN, Zhanliang, Hefei, Anhui 230088 (CN); CHEN, Peng, Hefei, Anhui 230088 (CN); LI, Xiaoxun, Hefei, Anhui 230088 (CN)
(74) Representative: Epping - Hermann - Fischer
(86) International application number: PCT/CN2022/125903
(87) International publication number: WO 2023/071867

(57) **Abstract**

An inverter and a direct-current switch assembly. The direct-current switch assembly comprises a direct-current switch and a connecting terminal unit, the direct-current switch and the connecting terminal unit being integrated on a mounting main body, the connecting terminal unit can realize connection and disconnection of a first terminal and a second terminal by means of the direct-current switch, and the direct-current switch is directly connected to a direct-current cable by means of the first terminal. The direct-current switch and the connecting terminal unit of the present invention are integrally mounted, not requiring a cable connection, improving disassembly and installation efficiency while reducing the number of electric devices and structural parts in a machine box, and capable of saving mounting space in the machine box.

## Description

This application claims the priority to Chinese Patent Application No. 202111283934.7, titled "INVERTER AND DIRECT-CURRENT SWITCH ASSEMBLY", filed with the China National Intellectual Property Administration on November 1, 2021, the entire disclosure of which is incorporated herein by reference.

### FIELD

The present application relates to the technical field of electrical equipment, in particular to an inverter and a direct-current switch assembly.

### BACKGROUND

A current electrical box such as an inverter and a combiner box generally includes components such as a chassis, a wiring terminal, a current detection board, a direct-current switch, and a printed circuit board. The wiring terminal, the current detection board, the direct-current switch, and the printed circuit board are mounted inside the chassis. The wiring terminal is generally mounted in a side wall of the chassis and is used to implement electrical connections between electrical devices inside the chassis and circuits outside the chassis. The wiring terminal is electrically connected with the current detection board by a cable, the current detection board is connected to one side of the direct-current switch by a cable, and the other side of the direct-current switch is connected to the printed circuit board by a cable. The current detection board is used to detect a current value of the connecting cable, and the direct-current switch is used to control the on/off of the cable.

From the above description, it can be seen that the number of electrical devices inside the existing electrical box are large, and the devices are connected by cables. Therefore, the number of cables is large, and the disassembly efficiency is low.

### SUMMARY

A direct-current switch and an inverter with a high disassembly efficiency are provided according to the present application.

A direct-current switch assembly is provided according to the present application, which includes a mounting body. A direct-current switch and at least one connecting terminal unit are integrated on the mounting body, each connecting terminal unit includes a first terminal and a second terminal, the first terminal is configured to be directly electrically connected with a direct-current cable, and the second terminal is configured to be electrically connected with a circuit inside a chassis; the first terminal and the second terminal of the connecting terminal unit are in a conducting state in a case that the direct-current switch is in a first position; the first terminal and the second terminal of the connecting terminal unit are in a non-conducting state in a case that the direct-current switch is in a second position.

The direct-current switch assembly according to the present application includes the direct-current switch and the at least one connecting terminal unit, the direct-current switch and the at least one connecting terminal unit are integrated on the mounting body, the connecting terminal unit can realize conduction and non-conduction of the first terminal and the second terminal by means of the direct-current switch, the direct-current switch is integrated with the at least one connecting terminal unit, and the direct-current switch is directly connected to a direct-current cable by means of the first terminal. Therefore, a cable connection is not required between the direct-current switch and the at least one connecting terminal unit, thereby improving disassembly and assembly efficiency while reducing the number of electrical devices and structural members in the chassis, and saving mounting space in the chassis.

In an embodiment, a through hole is provided in the mounting body, the direct-current switch includes an operating portion and a rotating shaft, the operating portion is configured to drive the rotating shaft to rotate, the operating portion is located outside the through hole, and the rotating shaft is located inside the through hole; the first terminal and the second terminal of the connecting terminal unit are in the conducting state by the rotating shaft in a case that the rotating shaft is rotated to the first position; the first terminal and the second terminal of the connecting terminal unit are in the non-conducting state in a case that the rotating shaft is rotated to the second position.

In an embodiment, the rotating shaft includes an insulation body. A conducting portion is fitted in the insulation body and is in one-to-one corresponding with the at least one connecting terminal unit; the first terminal and the second terminal of the connecting terminal unit simultaneously are in contact with the corresponding conducting portion in the case that the rotating shaft is positioned in the first position; the first terminal and the second terminal of each connecting terminal unit are in contact with a non-conducting portion of the insulation body in the case that the rotating shaft is positioned in the second position.

In an embodiment, the number of the at least connecting terminal unit is adjustable in an axial direction.

In an embodiment, the operating portion is arranged to be coaxial with the rotating shaft;
Or, the operating portion is arranged to be perpendicularly to the rotating shaft, and the operating portion and the rotating shaft are connected by a transmission mechanism, wherein the transmission mechanism includes one of a bevel gear transmission mechanism or a universal joint transmission mechanism.

In an embodiment, the direct-current switch assembly further includes a mounting portion fixedly connected with the mounting body, a through hole is defined on the mounting portion, at least a part of the first terminal is located in the through hole, a extending portion, extending out of the mounting body, of the mounting portion further is provided with a locking structure, and the locking structure is configured to be sealed to, locked with and fixed to a wall of the chassis.

In an embodiment, the locking structure includes a threaded structure or a buckle structure, and the mounting portion is fastened with the wall by means of a nut or a buckle.

In an embodiment, the direct-current switch assembly further includes a sheath which is fitted outside the extending portion, and the sheath is circumferentially sealed to the through hole of the mounting portion.

In an embodiment, the mounting body includes at least two body units, each of the at least two body units includes at least one connecting terminal unit, two adjacent body units are detachably assembled with each other and each of the at least two body units is provided with a through hole, which is arranged coaxially with the rotating shaft, where the rotating shaft is rotated in and cooperating with the through hole of each of the at least two body units.

In an embodiment, the first terminals and the second terminals are located on two opposite sides of the mounting body, and adjacent first terminals and adjacent second terminals are arranged to be staggered in an axial direction of the mounting body, or all the first terminals are arranged in at least one row in the axial direction.

In an embodiment, a detection unit is integrated on the mounting body, and is configured to detect at least one of a temperature of the at least one connecting terminal unit, a current of the at least one connecting terminal unit, or a voltage value of the at least one connecting terminal unit.

In addition, an inverter is provided according to the present application, which includes a chassis and a printed circuit board, and further includes the direct-current switch assembly according to any one of the above, wherein the mounting body is located in an inner chamber of the chassis, and a through hole is provided in the chassis of the inverter for the first terminal to be directly connected with a direct-current cable outside the chassis, and for the second terminal to be electrically connected with the printed circuit board.

Furthermore, an inverter is further provided according to the present application, which includes a chassis and a printed circuit board, and further includes the direct-current switch assembly according to any one of the above, wherein the mounting body is located in an inner chamber of the chassis, a through hole is provided in the wall of the chassis for a extending portion of the mounting portion to extend out of the inner chamber, and the shaft section and the wall of the chassis are sealed and locked by the locking structure.

The inverter according to the present application includes the above direct-current switch assembly, and thus also includes the above technical effects of the direct-current switch assembly.

### BRIEF DESCRIPTION OF THE DRAWINGS

FIG. 1 is a schematic structural view of an inverter according to an embodiment of the present application;
FIG. 2 is a side view of the inverter according to the embodiment of the present application;
FIG. 3 is a cross-sectional view of the inverter according to the embodiment of the present application;
FIG. 4 is a cross-sectional view of the inverter according to the embodiment of the present application viewed from another perspective;
FIG. 5 is a schematic perspective view of a direct-current switch assembly according to an embodiment of the present application;
FIG. 6 is a top view of the direct-current switch assembly shown in FIG. 5;
FIG. 7 is a front view of the direct-current switch assembly shown in FIG. 5;
FIG. 8 is a cross-sectional view of the direct-current switch assembly according to the embodiment of the present application;
FIG. 9 is a front view of the direct-current switch assembly according to a first embodiment of the present application;
FIG. 10 is a front view of the direct-current switch assembly according to a second embodiment of the present application;
FIG. 11 is a schematic structural view of a direct-current switch according to an embodiment of the present application; and
FIG. 12 is a cross-sectional view of the direct-current switch shown in FIG. 11.

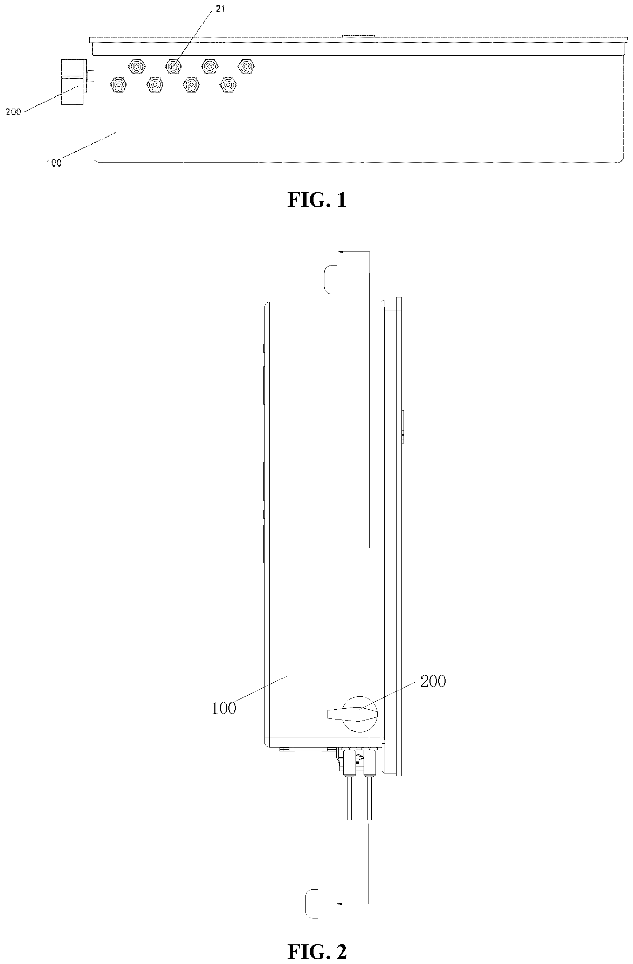

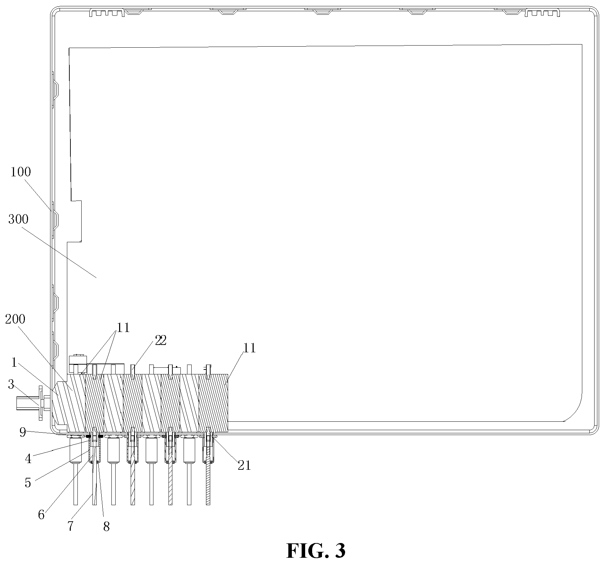

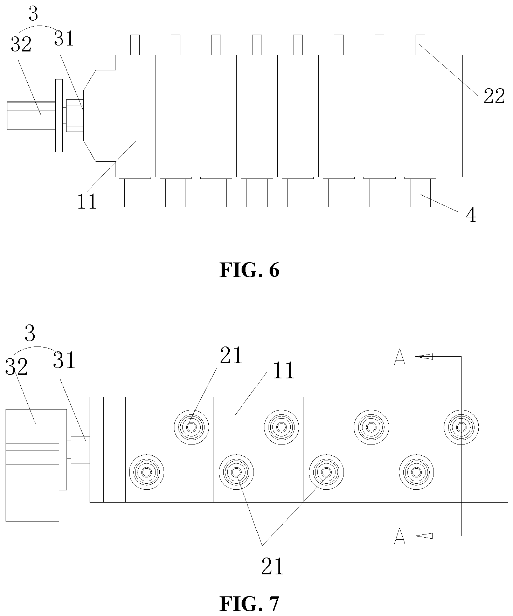

The one-to-one correspondence between the reference numerals and component names in FIG. 1 to FIG. 12 is as follows:

| | | | |
|---|---|---|---|
| 100, | chassis; | | |
| 200, | direct-current switch assembly; | 1, | mounting body; |
| 1a, | sealing ring; | 11, | body unit; |
| 2, | connecting terminal unit; | 21, | first terminal; |
| 22, | second terminal; | 3, | direct-current switch; |
| 31, | rotating shaft; | 3-1, | shaft section; |
| 311, | insulation body; | 312, | conducting portion; |
| 32, | operating portion; | 4, | mounting portion; |
| 5, | sheath; | 6, | pin; |
| 7, | cable; | 8, | sealing ring; |
| 9, | nut; | 300: | printed circuit board |

### DETAILED DESCRIPTION OF THE EMBODIMENTS

The terms "first", "second" and the like are for purpose of description, and should not be interpreted as indicating or implying relative importance or implying the number of the indicated technical features. Therefore, the features defined by "first" and "second" may explicitly or implicitly include one or more of the features.

In order to provide those skilled in the art a better understanding of the solutions of the present application, the present application is described hereinafter in further detail in conjunction with the drawings and embodiments.

Referring to FIG. 1 to FIG. 1 to FIG. 10, an inverter according to the present application includes a chassis 100 and a direct-current switch assembly 200. The chassis 100 has a mounting chamber, which is configured to mount electrical devices and to protect the electrical devices.

The direct-current switch assembly 200 according to the present application includes a mounting body 1. The mounting body 1 is insulator and used as a base for mounting other components. A specific structure of the mounting body 1 may be determined according to a structure of an electrical box to which it is applied, and the specific structure of the mounting body 1 is not specifically limited herein, as long as the use requirements can be met.

The mounting body 1 according to the present application is located in the mounting chamber of the chassis 100, and the mounting body 1 can be fixed to a wall of the chassis 100. A direct-current switch 3 and at least one connecting terminal unit 2 are integrated on the mounting body 1. Each connecting terminal unit 2 includes a first terminal 21 and a second terminal 22 that are electrically connected with a circuit outside the chassis 100 and a circuit inside the chassis 100, respectively. That is, one connecting terminal unit 2 has two connecting terminals (the first terminal 21 and the second terminal 22), where the first terminal 21 can be directly electrically connected with a direct-current cable, and the first terminal 21 is generally connected with the direct-current cable outside the chassis 100. The second terminal 22 can be electrically connected with a circuit inside the chassis 100. Part of the first terminals 21 is a positive terminal and part of the first terminals 21 is a negative terminal. Generally, the number of the positive terminals is the same as the number of the negative terminals, the number of the positive terminals and the number of the negative terminals may also be different. Similarly, the number of the second terminals 22 is the same as the number of the first terminals 21, which is not described in detail herein.

It should be noted that, the circuits described herein are not limited to cable circuits, but can also be other ways of realizing electrical connection, such as plug-in or electromagnetic connection.

In the direct-current switch assembly 200 according to the present application, the first terminal 21 and the second terminal 22 of the connecting terminal unit 2 are in a conducting state in a case that the direct-current switch 3 is in a first position; the first terminal 21 and the second terminal 22 of the connecting terminal unit 2 are in non-conducting state in a case that the direct-current switch 3 is in a second position.

Compared with the wiring terminal inside the chassis 100 and the direct-current switch connected by the cables in the conventional technology, the direct-current switch assembly 200 according to the present application includes the direct-current switch 3 and the at least one connecting terminal unit 2 that are integrated on the mounting body 1. The first terminal 21 and the second terminal 22 of the connecting terminal unit 2 are conducting or non-conducting by the direct-current switch 3, and the first terminal 21 is directly connected with the direct-current cable. Therefore, a cable connection is not required among the direct-current switch 2, the first terminal 21, and the second terminal 2, thereby improving disassembly and assembly efficiency while reducing the number of electrical devices and structural members in the chassis 100, and saving mounting space in the chassis 100.

The direct-current switch 3 according to the present application may be manually selected to be in the first position or the second position, or can be selected by electrical driving or remote control. The specific embodiment of the direct-current switch 3 is provided in the following description of the present application.

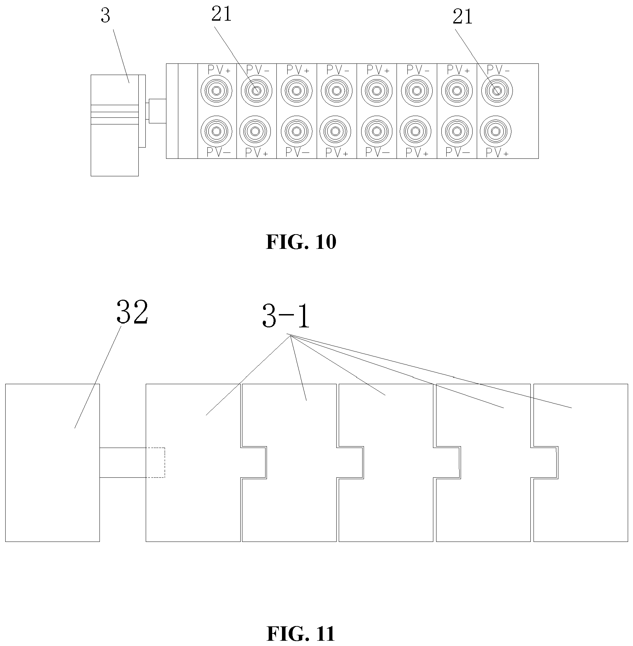

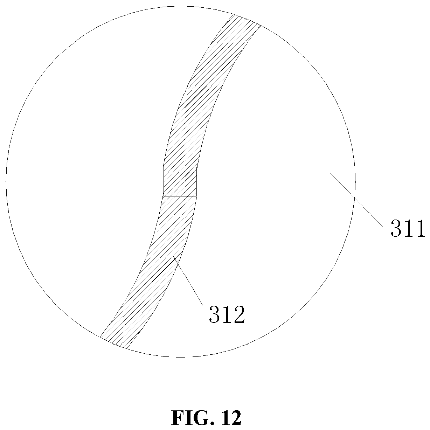

Referring to FIG. 11 and FIG. 12, in a specific embodiment, the mounting body 1 has a through hole, the direct-current switch 3 includes an operating portion 32 and a rotating shaft 31, and the operating portion 32 is configured to drive the rotating shaft 31 to rotate. The operating portion 32 may be directly fixedly connected to the rotating shaft 31. Certainly, the operating portion 32 and the rotating shaft 31 may be connected by a transmission mechanism, and the operating portion 32 indirectly drives the rotating shaft 31 to rotate. The operating portion 32 is located outside the through hole, and the rotating shaft 31 is located inside the through hole. The operator can obtain the rotation of the rotating shaft 31 inside the through hole by rotating the operating portion 32. In order to ensure the personal safety of the operator, the operating portion 32 is an insulator. The first terminal 21 and the second terminal 22 of the connecting terminal unit 2 are in a conducting state by the rotating shaft 31 in a case that the rotating shaft 31 is rotated to the first position. The first terminal 21 and the second terminal 22 of the connecting terminal unit 2 are in a non-conducting state in a case that the rotating shaft 31 is rotated to the second position. It can be seen from the above description that the rotating shaft 31 that conducts the first terminal 21 with the second terminal 22 is at least partially a conductor. In the case that the rotating shaft 31 is in the second position, the conductor on the rotating shaft 31 is separated from the first terminal 21 or/and the second terminal 22.

In a case that the connecting assembly according to the present application is mounted on the chassis 100, the mounting body 1 may be fixed to an inner side of the wall of the chassis 100, the second terminal 22 is located inside the chassis 100, and at least part of the operating portion 32 and at least part of the first terminal 21 are located outside the chassis 100, so that the operator can implement the reciprocating rotation of the rotating shaft 31 between the first position and the second position by rotating the operating portion 32, so as to realize conduction and non-conduction between the first terminal 21 and the corresponding second terminal 22 of the connecting terminal unit 2. This embodiment has a simple structure.

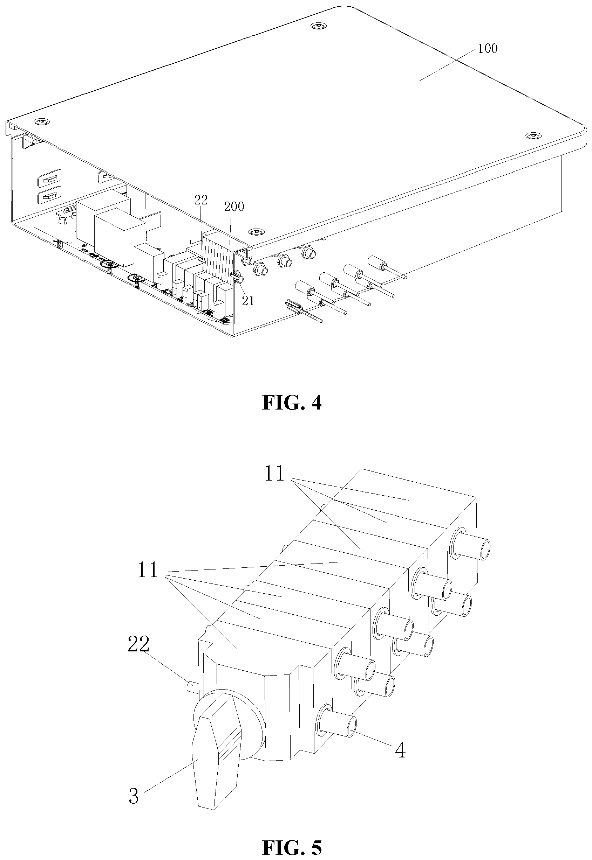

Referring to FIG. 11 and FIG. 12, in this embodiment, the rotating shaft 31 may include an insulation body 311. Conducting portions 312 are mounted on the insulation body 311 and is in one-to-one corresponding with the connecting terminal unit 2. The first terminal 21 and the second terminal 22 of each connecting terminal unit 2 simultaneously contact with the corresponding conducting portion 312 in the case that the rotating shaft 31 is in the first position. The first terminal 21 and the second terminal 22 of each connecting terminal unit 2 contact with the insulation body 311 in the case that the rotating shaft 31 is in the second position. It can be understood with reference to FIG. 5, a specific embodiment with eight connecting terminal units 2 is provided. Four of the eight first terminals 21 are positive terminals and the rest four are negative terminals, and the same applies to the second terminals 22. Correspondingly, the rotating shaft 31 also has eight conducting portions, which are in one-to-one correspondence with the eight connecting terminal units 2. The first terminals 21 are in conduction with the second terminals 22, respectively, by eight conducting portions in the case that the rotating shaft 31 is rotated to the first position.

In this embodiment, the conducting portion 312 is embedded and mounted on the insulation body 311. The insulation body 311 is provided not only for mounting the conducting portion 312 but also for insulating the first terminal 21 with the second terminal 22. The insulation body is integrated with all conducting portions, with a simple molding process and high rotational stability.

In an embodiment, along an axial direction of the connecting terminal unit 2, the number of the connecting terminal units 2 is adjustable. For example, the rotating shaft 31 may include at least two shaft sections 3-1 along an axial direction of the rotating shaft 31, and two adjacent shaft sections 3-1 are detachably connected. Each shaft segment 3-1 is provided with at least one conducting portion 312 for conducting the first terminal 21 with the second terminal 22 of the corresponding connecting terminal unit 2.

Structures of the adjacent shaft sections 3-1 may be the same or different. An embodiment is provided, in which a structure of the shaft sections located on two sides is different from a structure of three shaft sections in the middle. The adjacent shaft sections 3-1 may be threadedly connected with each other, or may be position-limited connected in a manner of concave-convex fit. In addition, the shaft section close to the operating portion 32 may be connected to the operating portion 32 by threaded connection or other means.

Certainly, the rotating shaft 31 may have an integral structure.

The operating portion 32 of the direct-current switch assembly 200 in this embodiment is arranged coaxially with the rotating shaft 31. The operating portion 32 is coaxial with the rotating shaft 31, so that the operating portion 32 can be directly fixedly connected to the rotating shaft 31 without the need for other transmission mechanisms, and the structure is simple.

Certainly, in order to meet the mounting requirements of various electrical boxes, the operating portion 32 may also be arranged to be perpendicularly to the rotating shaft 31, and the operating portion 32 and the rotating shaft 31 are connected by a transmission mechanism, which includes one of a bevel gear transmission mechanism and a universal joint transmission mechanism. The operating portion 32 and the rotating shaft 31 are connected by the transmission mechanism, which can adapt to different application environments and improve the application flexibility of the direct-current switch assembly 200.

In this embodiment, the direct-current switch assembly 200 further includes a mounting portion 4 fixedly connected with the mounting body 1, through holes are provided in the mounting portion 4, at least a part of the first terminals 21 are located in the through hole. An extending portion, extending out of the mounting body 1, of the mounting portion 4 further has a locking structure, which is configured to be sealed to, locked with and fixed to the chassis wall. The extending portion of the mounting portion 4 protrudes from the mounting body 1, which is used for the locking structure. The mounting portion 4 may be integrally formed with the mounting body 1 or be in a separate structure. After the mounting portion 4 and the mounting body 1 are separately formed, the mounting portion 4 is assembled to the mounting body 1. For example, the mounting portion 4 is welded to the mounting body 1 or threadedly connected to the mounting body 1. In the embodiment where the mounting portion 4 and the mounting body 1 are in a separate structure, a sealing ring 1a is further provided on the mounting body 1 for sealing with the mounting portion 4.

The locking structure in the above embodiment may include a threaded structure or a buckle structure, and the mounting portion 4 is fastened to the wall by a nut or a buckle. For example, an external threaded portion is provided on the extending portion of the mounting portion 4. The external threaded portion is screwed with the nut after extending through the wall of the chassis, so that the mounting body 1 is fixed to the chassis 100.

A sheath 5 is fitted inside the through hole of the mounting portion 4, and the sheath 5 is circumferentially sealed to the through hole. The sheath 5 can provide circumferential sealing for the cable 7 connected with the first terminal 21 and protect a connection section between the cable 7 and the first terminal 21. A specific embodiment of connecting the cable 7 with the first terminal 21 by a pin 6 is shown in Figures. A sealing ring 8 is provided at an opening of the through hole, so as to improve sealing performance.

In an embodiment, the mounting body 1 of the direct-current switch assembly 200 includes at least two body units 11, each of the at least two body units 11 is provided with at least one connecting terminal unit 2, and the adjacent body units 11 are detachably assembled with each other and each of the at least two body units 11 is provided with a through hole, which is arranged coaxially. The rotating shaft 31 is rotated and cooperating with the through hole. In this way, an appropriate number of body units 11 can be selected according to the actual demand of the electrical box, which greatly improves the use flexibility of the direct-current switch assembly 200. In addition, in a case that the terminal in a certain connecting terminal unit 2 cannot work normally, only that connecting terminal unit 2 is replaced without replacing the whole direct-current switch assembly 200, which greatly saves the maintenance cost.

In an embodiment, the first terminals 21 and the second terminals 22 of the direct-current switch assembly 200 are located on two opposite sides of the mounting body 1, respectively. In this arrangement, since the first terminals 21 are located on one side, a matching structure for extending the first terminal 21 out are only provided in one side wall of the chassis 100, and thus the chassis 100 has a simple structure. Adjacent first terminals 21 and adjacent second terminals 22 are arranged to be staggered in an axial direction, so that the operation space between adjacent terminals is large.

In an embodiment, all the first terminals 21 can be arranged in at least one row or multiple rows in the axial direction. In Figures, all the first terminals are arranged in two rows, one of the two rows is positive terminals, and the other one of the two rows is negative terminals, so that the positive and negative terminals are located in different rows so as to avoid wiring errors. Certainly, the positive terminal and the negative terminal may be arranged in the same row. A positive pole or a negative pole may be marked on an outer side wall of the chassis 100, so as to facilitate wiring.

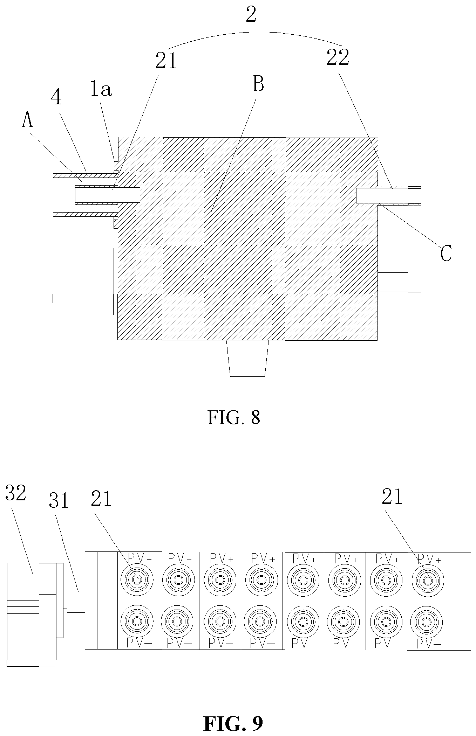

In the above embodiments, a detection unit is further integrated on the mounting body 1, which is configured to detect at least one of a temperature of the at least one connecting terminal unit 2, a current of the at least one connecting terminal unit 2, or a voltage value of the at least one connecting terminal unit 2. The detection unit may be mounted at a suitable position, for example, at a position A close to the first terminal or a position C close to the second terminal, or can be completely located inside the mounting body 1, and the position B in FIG. 8 is only for illustration.

The detection unit is further integrated on the direct-current switch assembly 200 in this embodiment, which improves the integration of the electrical devices.

An electrical box is further provided according to the present application, which includes a chassis 100, a printed circuit board 300 and a direct-current switch assembly 200. A through hole is provided on the chassis 100 for the first terminal 21 to be electrically connected with an external circuit and for the second terminal 22 to be electrically connected with the printed circuit board 300.

Other structures of the electrical box may be referred to the conventional technology, which is not described herein.

The electrical box according to the present application includes the above direct-current switch assembly 200, and thus includes the technical effects of the direct-current switch assembly 200.

The electrical box and the direct-current switch assembly according to the present application are described in detail above. The principle and embodiments of the present application are described through specific examples herein. The description of the above-described embodiments is merely used to facilitate understanding the method and core idea of the present application. It should be noted that, for those skilled in the art, many improvements and modifications may be further made to the present application without departing from the principle of the present application, and these improvements and modifications also fall within the protection scope of claims of the present application.

## Claims

1. A direct-current switch assembly, comprising a mounting body,
wherein a direct-current switch and at least one connecting terminal unit are integrated on the mounting body, each connecting terminal unit comprises a first terminal and a second terminal, the first terminal is configured to be directly electrically connected with a direct-current cable, and the second terminal is configured to be electrically connected with a circuit inside a chassis,
the first terminal and the second terminal of the connecting terminal unit are in a conducting state in a case that the direct-current switch is in a first position, and the first terminal and the second terminal of the connecting terminal unit are in a non-conducting state in a case that the direct-current switch is in a second position.

2. The direct-current switch assembly according to claim 1, wherein a through hole is provided in the mounting body, the direct-current switch comprises an operating portion and a rotating shaft, the operating portion is configured to drive the rotating shaft to rotate and is located outside the through hole, and the rotating shaft is located inside the through hole,
wherein the first terminal and the second terminal of the connecting terminal unit are in the conducive state by the rotating shaft in a case that the rotating shaft is rotated to the first position, and the first terminal and the second terminal of the connecting terminal unit are in the non-conducting state in a case that the rotating shaft is rotated to the second position.

3. The direct-current switch assembly according to claim 2, wherein the rotating shaft comprises an insulation body, and a conducting portion is fitted in the insulation body and is configured to be in one-to-one corresponding with the at least one connecting terminal unit,
wherein the first terminal and the second terminal of each connecting terminal unit simultaneously are in contact with the corresponding conducting portion in the case that the rotating shaft is positioned in the first position, and the first terminal and the second terminal of each connecting terminal unit are in contact with a non-conducting portion of the insulation body in the case that the rotating shaft is positioned in the second position.

4. The direct-current switch assembly according to claim 3, wherein the number of the at least one connecting terminal unit is adjustable in an axial direction.

5. The direct-current switch assembly according to claim 2, wherein the operating portion is arranged to be coaxial with the rotating shaft,
or the operating portion is arranged to be perpendicularly to the rotating shaft, and the operating portion and the rotating shaft are connected by a transmission mechanism, wherein the transmission mechanism comprises one of a bevel gear transmission mechanism or a universal joint transmission mechanism.

6. The direct-current switch assembly according to claim 2, further comprising a mounting portion fixedly connected with the mounting body, a through hole is provided on the mounting portion, at least a part of the first terminal is located in the through hole of the mounting portion, a extending portion, extending out of the mounting body, of the mounting portion is further provided with a locking structure, which is configured to be sealed to, locked with and fixed to a wall of the chassis.

7. The direct-current switch assembly according to claim 6, wherein the locking structure comprise a threaded structure or a buckle structure, and the mounting portion is fastened with the wall of the chassis by means of a nut or a buckle.

8. The direct-current switch assembly according to claim 6, further comprising a sheath which is fitted outside the extending portion, the sheath is circumferentially sealed to the through hole, and a sealing ring is further provided at an opening of the through hole of the mounting portion,
and/or, the mounting body further comprises a sealing ring, which is configured to be sealed to the mounting portion.

9. The direct-current switch assembly according to claim 2, wherein the mounting body comprises at least two body units, each of the at least two body units comprises at least one connecting terminal unit, two adjacent body units are detachably assembled with each other, and each of the at least two body units is provided with a through hole, which is arranged coaxially with the rotating shaft, wherein the rotating shaft is rotated in and cooperating with the through hole of each of the at least two body units.

10. The direct-current switch assembly according to claim 2, wherein the first terminals and the second terminals are located on two opposite sides of the mounting body, and adjacent first terminals and adjacent second terminals are arranged to be staggered in an axial direction of the mounting body, or all the first terminals are arranged in at least one row in the axial direction.

11. The direct-current switch assembly according to any one of claims 2 to 9, wherein a detection unit is further integrated on the mounting body, which is configured to detect at least one of a temperature of the at least one connecting terminal unit, a current of the least one connecting terminal unit, or a voltage value of the at least one connecting terminal unit.

12. An inverter, comprising a chassis and a printed circuit board, further comprising the direct-current switch assembly according to any one of claims 1 to 11, wherein the mounting body is located in an inner chamber of the chassis, and a through hole is provided in the chassis of the inverter for the first terminal to be directly connected with a direct-current cable outside the chassis and for the second terminal to be electrically connected with the printed circuit board.

13. An inverter, comprising a chassis and a printed circuit board, further comprising the direct-current switch assembly according to any one of claims 6 to 8, wherein the mounting body is located in an inner chamber of the chassis, a through hole is provided in a wall of the chassis for a extending portion of the mounting portion to extend out of the inner chamber, and the extending section and the wall of the chassis are sealed and locked by the locking structure.
